# EUROPEAN PATENT APPLICATION

(11) **EP 4 510 357 A1**
(43) Date of publication of application: **19.02.2025**
(21) Application number: 23876037.5
(22) Date of filing: 14.02.2023
(51) Int. Cl.: H01M 50/457, H01M 50/417, H01M 50/443, H01M 50/431, H01M 50/451, H01M 50/414, H01M 50/403, H01M 50/44, H01M 10/42

(54) **SEPARATOR AND PREPARATION METHOD THEREFOR, SECONDARY BATTERY AND ELECTRIC DEVICE**

(30) Priority: 14.10.2022 CN 202211258457
(71) Applicant: Contemporary Amperex Technology Co., Limited, Ningde, Fujian 352100 (CN)
(72) Inventor: MU, Xueying, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); WANG, Yaohui, Ningde, Fujian 352100 (CN); WANG, Zhaoguang, Ningde, Fujian 352100 (CN); HAN, Chongwang, Ningde, Fujian 352100 (CN)
(74) Representative: Laufhütte, Dieter
(86) International application number: PCT/CN2023/075813
(87) International publication number: WO 2024/077822

(57) **Abstract**

This application provides a separator and a preparation method thereof, a secondary battery, and an electric apparatus. The separator includes a first base film and a coating provided on at least one surface of the first base film. The coating includes a thermosensitive functional material. The thermosensitive functional material includes a high-temperature-resistant core layer and a thermosensitive surface layer at least partially enveloping the high-temperature-resistant core layer. The high-temperature-resistant core layer includes one or more of organic polymer fiber and inorganic particle that is surface-modified by a silane coupling agent. This application relates to corresponding preparation method of separator, secondary battery, and electric apparatus. The separator has low pore-closing temperature and high puncture strength, thereby improving the safety performance of the corresponding battery.

## Description

This application claims priority to Chinese Patent Application No. 2022112584573, filed with the China National Intellectual Property Administration on October 14, 2022 and entitled "SEPARATOR AND PREPARATION METHOD THEREOF, SECONDARY BATTERY, AND ELECTRIC APPARATUS", which is incorporated herein by reference in its entirety.

### TECHNICAL FIELD

This application relates to the field of secondary battery technologies, and in particular, to a separator and a preparation method thereof, a secondary battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

Along with the great development of secondary batteries, higher requirements are imposed on their safety performance. Batteries with excellent safety performance have high requirements for separators. For example, a separator for a battery with excellent safety performance should have a low risk of thermal runaway to avoid thermal runaway of a battery cell when the battery experiences a short circuit or other abnormalities. In addition, the separator is also required to have high mechanical safety performance.

Therefore, seeking separators with better safety performance is one of the main concerns of persons skilled in the art.

### SUMMARY

This application is conducted in view of the above problems, and one of the objectives of this application is to provide a separator that not only has low pore-closing temperature but also has high puncture strength, thereby improving the safety performance of batteries.

To achieve the foregoing objective, a first aspect of this application provides a separator including a first base film and a coating provided on at least one surface of the first base film, where the coating includes a thermosensitive functional material, the thermosensitive functional material includes a high-temperature-resistant core layer and a thermosensitive surface layer at least partially enveloping the high-temperature-resistant core layer, and the high-temperature-resistant core layer includes one or more of organic polymer fiber and inorganic particle that is surface-modified by a silane coupling agent.

The first base film is provided with the coating, the coating includes the thermosensitive functional material, and the thermosensitive functional material is a core-shell structure formed by the thermosensitive surface layer enveloping the high-temperature-resistant core layer. In this way, when a battery cell experiences abnormal sharp temperature rise, the thermosensitive surface layer in the thermosensitive functional material can sense in a timely manner and melt to close pores in the separator, blocking the migration of lithium ions and further amplification and accumulation of heat; and in addition, the high-temperature-resistant core layer in the coating can remain stable without deformation in a case of abnormal temperature rise, which can maintain the separator structure without shrinking while blocking heat diffusion, thereby enhancing the mechanical strength of the separator, and allowing for high puncture strength and good mechanical safety performance of the separator.

In any embodiment, a melting point of the thermosensitive surface layer is 80°C-140°C. It can be understood that the high-temperature-resistant core layer can remain stable without deformation at least at 80°C-140°C.

In any embodiment, the melting point of the thermosensitive surface layer is 85°C-135°C.

In any embodiment, the thermosensitive surface layer includes one or more of a polyethylene surface layer, a polybutylene surface layer, an ethylene-propylene copolymer surface layer, a polyethylene wax surface layer, a polyethylene oxide wax surface layer, and a polypropylene wax surface layer. These thermosensitive surface layer materials have a low melting point, which allows pore-closing temperature of the separator to be within 80°C-140°C. When the temperature of the battery cell reaches 80°C-140°C, the thermosensitive surface layer can melt and close the pores, blocking heat accumulation, thereby effectively improving the safety performance of a battery.

In any embodiment, the silane coupling agent includes one or more of 3-aminopropyltriethoxysilane (KH550), γ-glycidoxypropyltrimethoxysilane (KH560), γ-(methacryloxy)propyltrimethoxysilane (KH570), N-(β-aminoethyl)-y-aminopropyltrimethoxysilane (KH792), N-(β-aminoethyl-y-aminopropyl)methyldimethoxysilane (DL602, with a corresponding foreign brand of KBM-602), and vinyltrimethoxysilane (DL171).

In any embodiment, a median particle size by volume distribution Dᵥ50 of the thermosensitive functional material is 0.2 µm-3 µm; and optionally, the median particle size by volume distribution Dᵥ50 of the thermosensitive functional material is 0.6 µm-1.0 µm. The particle size of the thermosensitive functional material falling within this range allows for better flatness of the separator without blocking the microporous structure of the base film or adversely affecting the permeability of the separator.

In any embodiment, the organic polymer fiber includes one or more of aramid fiber, polyacrylonitrile fiber, polyimide fiber, polycarbonate fiber, polyphenylene sulfide fiber, polyether-ether-ketone fiber, polysulfone fiber, and polyarylate fiber.

In any embodiment, diameter of the organic polymer fiber is 50 nm-2000 nm.

In any embodiment, thickness of the thermosensitive surface layer is 10 nm-1000 nm; and optionally, the thickness of the thermosensitive surface layer is 60 nm-150 nm.

In any embodiment, the inorganic particle includes one or more of boehmite (γ-AlOOH), aluminum oxide (Al₂O₃), barium sulfate (BaSO₄), magnesium oxide (MgO), magnesium hydroxide (Mg(OH)₂), silicon dioxide (SiO₂), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), cerium oxide (CeO₂), zirconium titanate (ZrTiO₃), barium titanate (BaTiO₃), and magnesium fluoride (MgF₂). In this way, the above inorganic particle not only serves as a carrier material for the thermosensitive surface layer but also can improve the heat resistance of the separator.

In any embodiment, the inorganic particle is inorganic particle that is surface-modified by the silane coupling agent. In this way, inorganic particles are surface-modified by the silane coupling agent so that organic groups are introduced on the surface of the inorganic particles, which can increase a bonding force between the thermosensitive surface layer of organic material and the inorganic particles.

In any embodiment, the coating further includes a binder.

In any embodiment, the binder includes one or more of vinylidene fluoride-hexafluoropropylene copolymer, vinylidene fluoride-trichloroethylene copolymer, polystyrene, polyacrylate ester, polyacrylic acid, polyacrylate salt, polyacrylonitrile, polyvinylpyrrolidone, polyvinyl acetate, ethylene-vinyl acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, carboxymethyl cellulose, sodium carboxymethyl cellulose, lithium carboxymethyl cellulose, acrylonitrile-styrene-butadiene copolymer, polydiformylphenylenediamine, polyvinyl alcohol, styrene-butadiene copolymer, and polyvinylidene fluoride. In this way, the above binder is mixed with the thermosensitive functional material at a specific ratio to obtain a coating slurry.

In any embodiment, a mass ratio of the thermosensitive functional material to binder in the coating is 2:1-8:1.

In any embodiment, the high-temperature-resistant core layer uses inorganic particles, and thickness of the coating is 0.5 µm-5 µm.

In any embodiment, the high-temperature-resistant core layer uses organic polymer fiber, and electrostatic spinning is performed directly on the first base film as a substrate to produce organic polymer fiber coated with the thermosensitive functional material on an outer layer, followed by pressing to produce a coating with a thickness of 2 µm-20 µm.

In any embodiment, the separator further includes a second base film, and the coating is disposed between the first base film and the second base film.

In any embodiment, the first base film and the second base film are each independently selected from one or more of polyethylene, polypropylene, polyethylene terephthalate, polydiformylphenylenediamine, polybutylene terephthalate, polyester, polyacetal, polyamide, polycarbonate, polyimide, polyether-ether-ketone, polyaryletherketone, polyetherimide, polyamideimide, polybenzimidazole, polyethersulfone, polyphenylene oxide, cycloolefin copolymer, polyphenylene sulfide, and polyvinyl naphthaline.

A second aspect of this application further provides a preparation method of the separator according to the first aspect of this application, where the method includes the following steps:
providing a first base film and a coating slurry, where the coating slurry includes a thermosensitive functional material; and
applying the coating slurry on at least one surface of the first base film, followed by drying to obtain a separator;
where the thermosensitive functional material includes a high-temperature-resistant core layer and a thermosensitive surface layer at least partially enveloping the high-temperature-resistant core layer, and the high-temperature-resistant core layer includes one or more of organic polymer fiber and inorganic particle that is surface-modified by a silane coupling agent.

In any embodiment, a preparation method of the coating slurry includes the following step: mixing a thermosensitive functional material with a binder.

In any embodiment, a preparation method of the thermosensitive functional material includes the following steps:
dispersively mixing inorganic particles with a silane coupling agent to obtain inorganic particles surface-modified by the silane coupling agent; and
dispersively mixing the inorganic particles surface-modified by the silane coupling agent with a solution containing a thermosensitive surface layer material, and removing a solvent to obtain the thermosensitive functional material with inorganic particles as a core and a thermosensitive surface layer as a shell.

In any embodiment, a preparation method of the thermosensitive functional material includes the following step:
performing electrostatic spinning on a thermosensitive surface layer material and an organic polymer stock solution together to obtain the thermosensitive functional material with organic polymer fiber as a core and a thermosensitive surface layer as a shell.

In any embodiment, after the applying the coating slurry on at least one surface of the first base film and before drying, the preparation method further includes the following steps:
providing a second base film; and
attaching the second base film to a surface of the coating slurry facing away from the first base film.

A third aspect of this application further provides a secondary battery, where the secondary battery includes the separator according to the first aspect of this application or a separator prepared according to the second aspect of this application. In this way, the secondary battery has low pore-closing temperature and high puncture strength, thus having good safety performance.

A fourth aspect of this application further provides an electric apparatus, where the electric apparatus includes the secondary battery according to the third aspect of this application.

For the separator of this application, the first base film is provided with the coating, the coating includes the thermosensitive functional material of a core-shell structure formed by the thermosensitive surface layer enveloping the high-temperature-resistant core layer, and the high-temperature-resistant core layer includes one or more of organic polymer fiber and inorganic particle that is surface-modified by the silane coupling agent. In this way, the separator has low pore-closing temperature and high puncture strength, thereby improving the safety performance of the battery.

### BRIEF DESCRIPTION OF DRAWINGS

To better describe and illustrate the embodiments and/or examples in this application, reference may be made to one or more accompanying drawings. The additional details or examples used to describe the accompanying drawings should not be considered limitations on the scope of any one of the disclosed application, the currently described embodiments and/or examples, and the best mode of this application as currently understood.
FIG. 1 is a schematic diagram of a separator with inorganic particles as a core according to an embodiment of this application;
FIG. 2 is a schematic diagram of a separator with organic polymer fiber as a core according to another embodiment of this application;
FIG. 3 is a schematic diagram of a secondary battery according to an embodiment of this application;
FIG. 4 is an exploded view of the secondary battery according to the embodiment of this application in FIG. 3; and
FIG. 5 is a schematic diagram of an electric apparatus using a secondary battery as a power source according to an embodiment of this application.

Description of reference signs:
1. separator; 11. first base film; 12. coating; 13. second base film; 5. secondary battery; 51. housing; 52. electrode assembly; 53. cover plate; and 6. electric apparatus.

### DESCRIPTION OF EMBODIMENTS

The following specifically discloses in detail embodiments of the separator, secondary battery, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

The weight described in the specification of this application may be in µg, mg, g, kg, and other units of weight known in the chemical field.

Currently, along with the great development of secondary batteries, higher requirements are imposed on safety performance of secondary batteries. Batteries with excellent safety performance have high requirements for separators. For example, a separator for a battery with excellent safety performance should have low pore-closing temperature to avoid thermal runaway of a battery cell when the battery experiences a short circuit or other abnormalities. In addition, the separator is also required to have high puncture strength to ensure high mechanical safety performance of the battery. Therefore, seeking separators with low pore-closing temperature, high puncture strength, and better safety performance is one of the main concerns of persons skilled in the art. In view of this, the inventors have found through research a separator provided with a coating having a thermosensitive functional material with a special structure on a first base film, which allows for low pore-closing temperature and high puncture strength of the separator, thereby improving the safety performance of a corresponding battery.

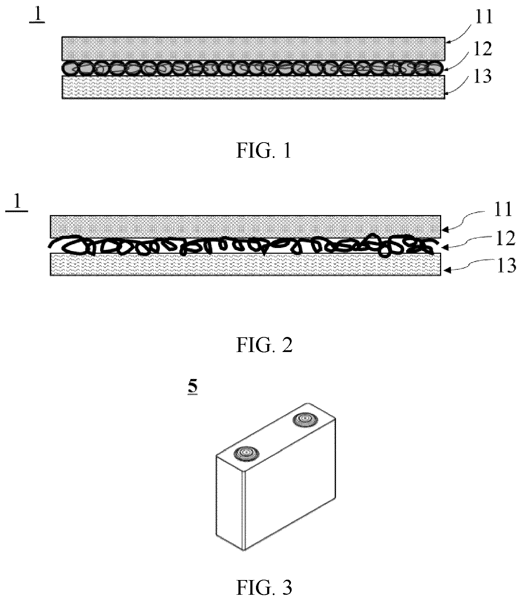

Refer to FIGs. 1 and 2. In some embodiments, a first aspect of this application provides a separator 1 including a first base film 11, a coating 12, and a second base film 13 that are sequentially laminated. The coating 12 includes a thermosensitive functional material, the thermosensitive functional material includes a high-temperature-resistant core layer and a thermosensitive surface layer at least partially enveloping the high-temperature-resistant core layer, and the high-temperature-resistant core layer includes one or more of organic polymer fiber and inorganic particle that is surface-modified by a silane coupling agent.

The coating 12 is provided between the first base film 11 and the second base film 13, the coating 12 includes the thermosensitive functional material, the thermosensitive functional material is a core-shell structure formed by the thermosensitive surface layer at least partially enveloping the high-temperature-resistant core layer, and the high-temperature-resistant core layer includes one or more of organic polymer fiber and inorganic particle that is surface-modified by the silane coupling agent. In this way, when a battery cell experiences abnormal sharp temperature rise, the thermosensitive surface layer in the thermosensitive functional material can sense in a timely manner and melt to close pores in the base film of the separator 1, blocking the migration of lithium ions and further amplification and accumulation of heat; and in addition, the high-temperature-resistant core layer in the coating 12 can remain stable without deformation in a case of abnormal temperature rise, which can maintain the separator 1 structure without shrinking while blocking heat diffusion, thereby enhancing the mechanical strength of the separator 1, and allowing for high puncture strength and good mechanical safety performance of the separator 1.

In some embodiments, a melting point of the thermosensitive surface layer is 80 degrees Celsius (°C)-140°C; and the high-temperature-resistant core layer can remain stable without deformation at least at 80°C-140°C. It can be understood that the melting point of the thermosensitive surface layer may be but is not limited to 80°C, 85°C, 90°C, 95°C, 100°C, 105°C, 110°C, 115°C, 120°C, 125°C, 130°C, 135°C, or 140°C.

In some embodiments, the melting point of the thermosensitive surface layer is 85°C-135°C.

In some embodiments, the thermosensitive surface layer includes one or more of a polyethylene surface layer, a polybutylene surface layer, an ethylene-propylene copolymer surface layer, a polyethylene wax surface layer, a polyethylene oxide wax surface layer, and a polypropylene wax surface layer. In this way, these thermosensitive surface layer materials have a low melting point, which allows pore-closing temperature of the separator 1 to be within 80°C-140°C. When the temperature of the battery cell reaches 80°C-140°C, the thermosensitive surface layer can melt and close the pores, blocking heat accumulation, thereby further improving the safety performance of a battery.

It can be understood that a material of the thermosensitive surface layer may be any one of polyethylene, polybutylene, ethylene-propylene copolymer, polyethylene wax, polyethylene oxide wax, and polypropylene wax, or a combination of two or more materials of polyethylene, polybutylene, ethylene-propylene copolymer, polyethylene wax, polyethylene oxide wax, and polypropylene wax. In production, different materials mentioned above can be selected as needed to form the thermosensitive surface layer. For example, a corresponding thermosensitive surface layer material can be selected according to a required specific pore-closing temperature.

In some embodiments, the inorganic particle includes one or more of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, and magnesium fluoride. The above inorganic particle can not only serve as a carrier material for the thermosensitive surface layer but also remain stable without deformation when the battery cell experiences abnormal sharp temperature rise, thereby enhancing the heat resistance and puncture strength of the separator 1.

It can be understood that the inorganic particle used in the thermosensitive functional material may be any one of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, and magnesium fluoride, or the above inorganic particle materials may be used in a mixed manner.

In some embodiments, the inorganic particle is inorganic particle that is surface-modified by the silane coupling agent. Inorganic particles are surface-modified by the silane coupling agent so that organic groups can be introduced on the surface of the inorganic particles, which can in turn increase a bonding force between the thermosensitive surface layer of organic material and the inorganic particles.

In some embodiments, the silane coupling agent includes one or more of 3-aminopropyltriethoxysilane (KH550), γ-glycidoxypropyltrimethoxysilane (KH560), γ-(methacryloxy)propyltrimethoxysilane (KH570), N-(β-aminoethyl)-y-aminopropyltrimethoxysilane (KH792), N-(β-aminoethyl-y-aminopropyl)methyldimethoxysilane (DL602, with a corresponding foreign brand of KBM-602), and vinyltrimethoxysilane (DL171).

In some embodiments, a median particle size by volume distribution Dᵥ50 of the thermosensitive functional material is 0.2 micrometers (µm)-3 µm. The median particle size by volume distribution Dᵥ50 of the thermosensitive functional material falling within this range allows for better flatness of the separator 1 without blocking the microporous structure of the base film or adversely affecting the permeability of the separator 1.

It can be understood that the median particle size by volume distribution Dᵥ50 of a material has a meaning commonly known in the art, which is a corresponding particle size when a cumulative volume distribution percentage reaches 50%; and the median particle size by volume distribution Dᵥ50 of the thermosensitive functional material may be but is not limited to 0.2 µm, 0.4 µm, 0.6 µm, 0.8 µm, 1.0 µm, 1.2 µm, 1.4 µm, 1.6 µm, 1.8 µm, 2.0 µm, 2.2 µm, 2.4 µm, 2.6 µm, 2.8 µm, or 3.0 µm.

In some embodiments, the median particle size by volume distribution Dᵥ50 of the thermosensitive functional material is 0.6 µm-1.0 µm.

Refer to FIG. 2. In some embodiments, the high-temperature-resistant core layer includes organic polymer fiber.

In some embodiments, the organic polymer fiber includes one or more of aramid fiber, polyacrylonitrile fiber, polyimide fiber, polycarbonate fiber, polyphenylene sulfide fiber, polyether-ether-ketone fiber, polysulfone fiber, and polyarylate fiber. The organic polymer fiber may form the thermosensitive functional material together with a thermosensitive surface layer material by electrostatic spinning.

In some embodiments, diameter of the organic polymer fiber is 50 nanometers (nm)-2000 nm. It can be understood that the diameter of the organic polymer fiber may be but is not limited to 50 nm, 100 nm, 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, or 2000 nm.

In some embodiments, thickness of the thermosensitive surface layer is 10 nm-1000 nm. It can be understood that the thickness of the thermosensitive surface layer may be but is not limited to 10 nm, 50 nm, 100 nm, 200 nm, 300 nm, 400 nm, 500 nm, 600 nm, 700 nm, 800 nm, 900 nm, or 1000 nm.

In some embodiments, the coating 12 further includes a binder. A coating slurry can be formed by mixing the binder, the thermosensitive functional material, and a certain amount of solvent (such as water).

In some embodiments, the binder includes one or more of vinylidene fluoride-hexafluoropropylene copolymer, vinylidene fluoride-trichloroethylene copolymer, polystyrene, polyacrylate ester, polyacrylic acid, polyacrylate salt, polyacrylonitrile, polyvinylpyrrolidone, polyvinyl acetate, ethylene-vinyl acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, carboxymethyl cellulose, sodium carboxymethyl cellulose, lithium carboxymethyl cellulose, acrylonitrile-styrene-butadiene copolymer, polydiformylphenylenediamine, polyvinyl alcohol, styrene-butadiene copolymer, and polyvinylidene fluoride. In this way, the above binder is mixed with the thermosensitive functional material at a specific ratio to obtain a coating slurry, facilitating the attachment of the thermosensitive functional material to the base film and the bonding of the first base film 11 and the second base film 13.

In some embodiments, a mass ratio of the thermosensitive functional material to binder in the coating 12 is 2:1-8:1. Thickness of the coating 12 is 0.5 µm-20 µm. It can be understood that the thickness of the coating 12 may be but is not limited to 0.5 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm.

In some embodiments, the first base film 11 and the second base film 13 are each independently selected from one or more of polyethylene, polypropylene, polyethylene terephthalate, polydiformylphenylenediamine, polybutylene terephthalate, polyester, polyacetal, polyamide, polycarbonate, polyimide, polyether-ether-ketone, polyaryletherketone, polyetherimide, polyamideimide, polybenzimidazole, polyethersulfone, polyphenylene oxide, cycloolefin copolymer, polyphenylene sulfide, and polyvinyl naphthaline. It can be understood that the first base film 11 and the second base film 13 may both be any one of polyethylene, polypropylene, polyethylene terephthalate, polydiformylphenylenediamine, polybutylene terephthalate, polyester, polyacetal, polyamide, polycarbonate, polyimide, polyether-ether-ketone, polyaryletherketone, polyetherimide, polyamideimide, polybenzimidazole, polyethersulfone, polyphenylene oxide, cycloolefin copolymer, polyphenylene sulfide, and polyvinyl naphthaline, or a composite separator formed by two or more of the above separators; and the first base film 11 and the second base film 13 may be a same type of separator or different types of separators.

A second aspect of this application further provides a preparation method of the separator 1 according to the first aspect of this application, where the method includes the following steps:
forming the coating 12 on at least one surface of either any surface of the first base film 11 or any surface of the second base film 13; where the coating 12 includes a thermosensitive functional material, the thermosensitive functional material includes a high-temperature-resistant core layer and a thermosensitive surface layer at least partially enveloping the high-temperature-resistant core layer, and the high-temperature-resistant core layer includes one or more of organic polymer fiber and inorganic particle that is surface-modified by a silane coupling agent;
attaching the first base film 11 to the second base film 13 and making the coating 12 be located between the first base film 11 and the second base film 13; and
pressing and shaping the first base film 11 and the second base film 13.

In this way, the coating 12 is formed on at least one surface of either any surface of the first base film 11 or any surface of the second base film 13; the first base film 11 is attached to the second base film 13, and the coating 12 is made to be located between the first base film 11 and the second base film 13; and the first base film 11 and the second base film 13 are pressed and shaped to obtain the separator 1 of this application. The preparation method of the separator 1 features simple process.

In some embodiments, the coating 12 is formed by applying a slurry of the coating 12 on at least one surface of either any surface of the first base film 11 or any surface of the second base film 13. A preparation method of the slurry of the coating 12 includes the following step: mixing the thermosensitive functional material with a binder. Further, a certain amount of solvent may also be added.

In some embodiments, a preparation method of the thermosensitive functional material includes the following steps: dispersively mixing inorganic particles with a silane coupling agent to obtain inorganic particles surface-modified by the silane coupling agent; and dispersively mixing the inorganic particles surface-modified by the silane coupling agent with a solution containing a thermosensitive surface layer material, and removing a solvent to obtain the thermosensitive functional material with inorganic particles as a core and a thermosensitive surface layer as a shell.

In this way, inorganic particles are organically surface-modified by the silane coupling agent so that organic groups can be introduced on the surface of the inorganic particles, allowing for better bonding of polyolefin with the inorganic particles, and sufficient bonding force between the thermosensitive surface layer and the inorganic particle carrier.

In some embodiments, the silane coupling agent includes at least one of 3-aminopropyltriethoxysilane, γ-glycidoxypropyltrimethoxysilane, γ-(methacryloxy)propyltrimethoxysilane, N-(β-aminoethyl)-y-aminopropyltrimethoxysilane, N-(β-aminoethyl-y-aminopropyl)methyldimethoxysilane, and vinyltrimethoxysilane.

In some other embodiments, the coating 12 is formed by applying an electrostatic spinning thermosensitive functional material on at least one surface of either any surface of the first base film 11 or any surface of the second base film 13. A preparation method of the electrostatic spinning thermosensitive functional material includes the following step: performing electrostatic spinning on a thermosensitive surface layer material and an organic polymer stock solution together to obtain the thermosensitive functional material with organic polymer fiber as a core and a thermosensitive surface layer as a shell.

The coating formed by the above thermosensitive functional material that is prepared by electrostatic spinning has a three-dimensional network porous structure, allowing for high porosity of the separator. The thermosensitive surface layer in the electrostatic spinning thermosensitive functional material can melt and close the pores when the battery cell experiences abnormal temperature rise, blocking the migration of lithium ions, and in turn preventing further accumulation of heat; while the organic polymer fiber, as the high-temperature-resistant core layer, can remain stable without deformation in a case of temperature rise, which can maintain the separator structure without shrinking while blocking heat diffusion, thereby enhancing the overall mechanical strength of the separator, enhancing the puncture strength of the separator, and reducing the probability of battery cell safety accidents from multiple dimensions.

A third aspect of this application further provides a secondary battery, where the secondary battery includes the separator 1 according to the first aspect of this application. In this way, the secondary battery has low pore-closing temperature and high puncture strength, thus having good safety performance.

A fourth aspect of this application further provides an electric apparatus, where the electric apparatus includes the secondary battery according to the third aspect of this application.

The secondary battery and electric apparatus of this application are described below with reference to the accompanying drawings as appropriate.

Unless otherwise specified, the mentioned components of battery and types or amounts of materials are applicable to both lithium-ion secondary batteries and sodium-ion secondary batteries.

An embodiment of this application provides a secondary battery.

Generally, the secondary battery includes a positive electrode plate, a negative electrode plate, an electrolyte, and a separator. During charging and discharging of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### Positive electrode plate

The positive electrode plate includes a positive electrode current collector and a positive electrode film layer disposed on at least one surface of the positive electrode current collector.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material on a polymer material matrix. The metal material includes but it not limited to aluminum, aluminum alloy, nickel, nickel alloy, titanium, titanium alloy, silver, or silver alloy. The polymer material matrix (for example, matrices of polypropylene (PP), polyethylene terephthalate (PET), polybutylene terephthalate (PBT), polystyrene (PS), and polyethylene (PE)).

In some embodiments, a positive electrode active material may include a well-known positive electrode active material used for batteries in the art.

For example, the positive electrode active material of a lithium-ion secondary battery may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.3}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂, (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

For example, the positive electrode active material of a sodium-ion secondary battery may include at least one of the following materials: sodium transition metal oxide, polyanionic compound, and Prussian blue compound. However, this application is not limited to such materials, and may alternatively use other conventional well-known materials that can be used as positive electrode active materials for sodium-ion batteries.

In an optional technical solution of this application, for the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

In an optional technical solution of this application, the polyanionic compound may be a compound containing a sodium ion, a transition metal ion, and a tetrahedral (YO₄)ⁿ⁻ anion unit. The transition metal may be at least one of Mn, Fe, Ni, Co, Cr, Cu, Ti, Zn, V, Zr, and Ce; Y may be at least one of P, S, and Si; and n denotes the valence of (YO₄)ⁿ⁻.

The polyanionic compound may alternatively be a compound containing a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr, and Ce; Y may be at least one of P, S, and Si; n denotes the valence of (YO₄)ⁿ⁻; and the halogen may be at least one of F, Cl, and Br.

The polyanionic compound may alternatively be a compound containing a sodium ion, a tetrahedral (YO₄)ⁿ⁻ anionic unit, a polyhedral unit (ZO_{y})^{m+}, and a selectable halogen anion. Y may be at least one of P, S, and Si; n denotes the valence of (YO₄)ⁿ⁻; Z denotes transition metal and may be at least one of Mn, Fe, Ni, Co, Cr, Cu, Ti, Zn, V, Zr, and Ce; m denotes the valence of (ZO_{y})^{m+}; and the halogen may be at least one of F, Cl, and Br.

The polyanionic compound is, for example, at least one of NaFePO₄, Na₃V₂(PO₄)₃ (sodium vanadium phosphate, NVP for short), Na₄Fe₃(PO₄)₂(P₂O₇), NaM'PO₄F (M' is one or more of V, Fe, Mn, and Ni), and Na₃(VO_{y})₂(PO₄)₂F_{3-2y} (0 ≤ y ≤ 1).

The Prussian blue compound may be a compound containing a sodium ion, a transition metal ion, and a cyanide ion (CN⁻). The transition metal may be at least one of Mn, Fe, Ni, Co, Cr, Cu, Ti, Zn, V, Zr, and Ce. The Prussian blue compound is, for example, NaₐMeₑMe'_{c}(CN)₆, where Me and Me' are each independently at least one of Ni, Cu, Fe, Mn, Co, and Zn, 0 < a ≤ 2, 0 < b < 1, and 0 < c <1.

A weight percentage of the positive electrode active material in the positive electrode film layer is 80wt%-100wt% based on a total weight of the positive electrode film layer.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. A weight percentage of the binder in the positive electrode film layer is 0-20wt% based on the total weight of the positive electrode film layer.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber. A weight percentage of the conductive agent in the positive electrode film layer is 0-20wt% based on the total weight of the positive electrode film layer.

In some embodiments, the positive electrode plate may be prepared in the following manner: the constituents used for preparing the positive electrode plate, for example, the positive electrode active material, the conductive agent, the binder, and any other constituent are dispersed in a solvent (for example, N-methylpyrrolidone) to form a positive electrode slurry, where a solid content of the positive electrode slurry is 40 weight percent (wt%)-80wt%, and the viscosity at room temperature of the positive electrode slurry is adjusted to 5000 millipascal-seconds (mPa·s)-25000 mPa·s; and the positive electrode slurry is applied onto a surface of the positive electrode current collector, followed drying, and cold pressing with a cold rolling machine to obtain the positive electrode plate; where the coating surface density per unit area of the positive electrode powder is 150 milligrams/square meter (mg/m²)-350 mg/m², and the compacted density of the positive electrode plate is 3.0 grams/cubic centimeter (g/cm³)-3.6 g/cm³, optionally 3.3 g/cm³-3.5 g/cm³.

A formula for calculating the compacted density is as follows: compacted density = coating surface density/(thickness of electrode plate after pressing - thickness of current collector).

The mass M of the positive electrode active substance in the positive electrode film per unit area can be obtained by weighing with a standard balance.

The thickness T of the positive electrode film can be measured with a micrometer. For example, a micrometer of model Mitutoyo293-100 with 0.1 µm resolution may be used. It should be noted that the thickness of the positive electrode film described in this application refers to the thickness of the positive electrode film in the positive electrode plate after cold pressing and used for assembling a battery.

### Negative electrode plate

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material on a polymer material matrix. The metal material includes but is not limited to copper, copper alloy, nickel, nickel alloy, titanium, titanium alloy, silver, or silver alloy. The polymer material matrix includes but is not limited to matrices of polypropylene (PP), polyethylene terephthalate (PET), polybutylene terephthalate (PBT), polystyrene (PS), and polyethylene (PE).

In some embodiments, the negative electrode active material may be a well-known negative electrode active material used for batteries in the art.

For example, the negative electrode active material of a lithium-ion secondary battery may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. this application is not limited to such materials, and may alternatively use other conventional well-known materials that can be used as negative electrode active materials for batteries. One of these negative electrode active materials may be used alone, or two or more of them may be used in combination.

For example, the negative electrode active material of a sodium-ion secondary battery is generally a hard carbon material, two-dimensional metal carbide, or nitride. Preferably, the negative electrode active material of a sodium-ion secondary battery is generally a hard carbon material.

A weight percentage of the negative electrode active material in the negative electrode film layer is 70wt%-100wt% based on a total weight of the negative electrode film layer.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS). A weight percentage of the binder in the negative electrode film layer is 0-30wt% based on the total weight of the negative electrode film layer.

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, and carbon nanofiber. A weight percentage of the conductive agent in the negative electrode film layer is 0-20wt% based on the total weight of the negative electrode film layer.

In some embodiments, the negative electrode film layer further optionally includes other additives such as a thickener (for example, sodium carboxymethyl cellulose (CMC-Na)). A weight percentage of the other additives in the negative electrode film layer is 0-15wt% based on the total weight of the negative electrode film layer.

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to form a negative electrode slurry, where a solid content of the negative electrode slurry is 30wt%-70wt%, and the viscosity at room temperature of the negative electrode slurry is adjusted to 2000 mPa·s-10000 mPa·s; and the obtained negative electrode slurry is applied onto the negative electrode current collector, followed by drying and cold pressing such as using counter-rollers to obtain the negative electrode plate. The coating surface density per unit area of the negative electrode powder is 75 mg/m²-220 mg/m², and the compacted density of the negative electrode plate is 1.2 grams/cubic meter (g/m³)-2.0 g/m³.

The mass M of the negative electrode active substance in the negative electrode film per unit area can be obtained by weighing with a standard balance.

The thickness T of the negative electrode film can be measured with a micrometer. For example, a micrometer of model Mitutoyo293-100 with 0.1 µm resolution may be used. It should be noted that the thickness of the negative electrode film described in this application refers to the thickness of the negative electrode film in the negative electrode plate after cold pressing and used for assembling a battery.

### Electrolyte

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt of a lithium-ion secondary battery may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

The electrolytic salt of a sodium-ion secondary battery may be one or more selected from sodium hexafluorophosphate, sodium bis(fluorosulfonyl)imide, sodium bistrifluoromethanesulfonimide, sodium trifluoromethanesulfonate, sodium tetrafluoroborate, sodium difluorophosphate, sodium perchlorate, and sodium chloride.

The concentration of the electrolytic salt is usually 0.5 moles/liter (mol/L)-5 mol/L.

In some embodiments, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the liquid electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### Separator

In some embodiments, the secondary battery further includes a separator. The separator is the separator as described above.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the secondary battery, and the secondary battery may be cylindrical, rectangular, or of any other shapes. For example, FIG. 3 shows a secondary battery 5 of a rectangular structure as an example.

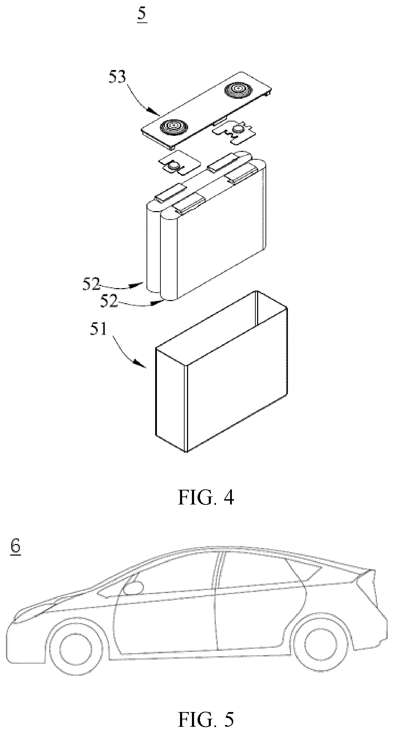

In some embodiments, referring to FIG. 4, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

In some embodiments, the secondary battery 5 may be assembled into a battery module, and the battery module may include one or more secondary batteries 5. The specific quantity may be chosen by persons skilled in the art according to use and capacity of the battery module.

In the battery module, a plurality of secondary batteries 5 may be sequentially arranged in a length direction of the battery module. Certainly, the batteries may alternatively be arranged in any other manners. Further, the plurality of secondary batteries 5 may be fastened through fasteners.

Optionally, the battery module may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

The battery pack may include a battery box and a plurality of battery modules arranged in the battery box. The battery box includes an upper box body and a lower box body. The upper box body can be engaged with the lower box body to form an enclosed space for accommodating the battery modules. The plurality of battery modules may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 5 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

The following are some examples.

To describe the technical problems solved by this application, technical solutions, and beneficial effects of this application more clearly, the following further describes this application in detail with reference to the examples and accompanying drawings. Apparently, the described examples are merely some but not all of the examples of this application. The following description of at least one illustrative example is merely descriptive and definitely is not construed as any limitation on this application or on use of this application. All other examples obtained by persons of ordinary skill in the art based on some examples of this application without creative efforts shall fall within the protection scope of this application.

Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation examples

### 1. Preparation of separator

### Preparation example 1

A silane coupling agent 3-aminopropyltriethoxysilane containing aluminum oxide particles of 1% by weight was taken and added to an aluminum oxide dispersion liquid with an average particle size of 0.4 µm, a dispersion medium being deionized water, and the resulting mixture was stirred to uniformity, filtered, and vacuum-dried at 45°C for 1 h to obtain organically surface-modified nano aluminum oxide particles.

1 part by weight of polyethylene (with a density of 910 kilograms/cubic meter (kg/m³)-970 kg/m³ and a melting point of 110°C-135°C) was dissolved in toluene solvent, then 9 parts by weight of the modified nano aluminum oxide particles prepared in the above step were added, and the resulting mixture was stirred to uniformity and vacuum-dried at 45°C for 1 hour (h) to remove the solvent, so as to obtain a thermosensitive functional material. Thickness of a thermosensitive surface layer in the thermosensitive functional material was 50 nm.

The prepared thermosensitive ceramic particles were mixed with polyacrylate ester and water at a mass ratio of 4:1:5 to form a coating slurry.

A PE (polyethylene) microporous membrane with a thickness of 7 µm was used as a first base film, and PP (polypropylene) microporous membrane with a thickness of 12 µm was as a second base film; and the coating slurry prepared in the above step was applied between the first base film and the second base film to make the first base film and the second base film adhered and attached to each other using the coating slurry, followed by pressing and shaping to obtain a finished separator. Thickness of the coating was 1 µm.

### Preparation example 2:

This preparation example was basically the same as preparation example 1, with the difference lying in the type of the inorganic particles. In this preparation example, the inorganic particles were boehmite.

### Preparation example 3:

This preparation example was basically the same as preparation example 1, with the difference lying in the type of the silane coupling agent. In this preparation example, the silane coupling agent was γ-glycidoxypropyltrimethoxysilane.

### Preparation example 4:

This preparation example was basically the same as preparation example 1, with the differences lying in the amount of the silane coupling agent and the thickness of the thermosensitive surface layer. In this preparation example, the amount of the silane coupling agent was 0.1% of the weight of the aluminum oxide particles. The thickness of the thermosensitive surface layer was 10 nm.

### Preparation example 5:

This preparation example was basically the same as preparation example 1, with the difference lying in the type of the thermosensitive surface layer material. In this preparation example, the thermosensitive surface layer material was polybutylene.

### Preparation example 6:

This preparation example was basically the same as preparation example 1, with the differences lying in the weight ratio of the thermosensitive surface layer material to the modified inorganic particles and the thickness of the thermosensitive surface layer. In this preparation example, the amount of the thermosensitive surface layer material was 3 parts by weight, and the amount of the modified nano aluminum oxide particles was 7 parts by weight. The thickness of the thermosensitive surface layer was 100 nm.

### Preparation example 7:

This preparation example was basically the same as preparation example 1, with the difference lying in the composition ratio of the binder. In this preparation example, the binder was acrylic acid, and the ratio of the thermosensitive functional material to the binder was 5:1.

### Preparation example 8:

This preparation example was basically the same as preparation example 1, with the difference lying in the type of the base film. In this preparation example, the first base film was PE with a thickness of 7 µm, and the second base film was PE with a thickness of 7 µm.

### Preparation example 9:

This preparation example was basically the same as preparation example 1, with the difference lying in the thickness of the coating. In this preparation example, the thickness of the coating of the separator was 2 µm.

### Preparation example 10:

Polyethylene (with a density of 910 kg/m³-970 kg/m³ and a melting point of 110°C-135°C) was dissolved in toluene solution; and an aramid stock solution was dissolved in a mixed solution of DMAc (N,N-dimethylacetamide) and acetone, the resulting mixture was continuously stirred for 12 h, left stand for defoaming, and then electrostatic spinning was performed. Polyethylene was used as the surface layer and aramid was used as the core layer, the advancing speeds of the surface layer and the core layer were 0.2 milliliters/hour (mL/h) and 0.4 mL/h respectively; and the spinning voltage was 23.0 kilovolts (kV). The thermosensitive functional material with a polyethylene thermosensitive surface layer and an aramid fiber high-temperature-resistant core layer was obtained. Thickness of the thermosensitive surface layer in the thermosensitive functional material was 100 nm.

A PE microporous membrane with a thickness of 7 µm was used as the substrate, and the above thermosensitive functional material prepared by electrostatic spinning was directly sprayed on the membrane substrate, followed by pressing and shaping to produce the separator. The thickness of the coating after pressing was 5 µm.

### Preparation example 11:

This preparation example was basically the same as preparation example 10, with the difference lying in that the base film was changed to PP microporous membrane with a thickness of 12 µm.

### Preparation example 12:

This preparation example was basically the same as preparation example 10, with the difference lying in that a PP microporous membrane with a thickness of 12 µm was further included, and the PE microporous membrane, the coating, and the PP microporous membrane were sequentially combined, followed by pressing and shaping to produce the separator.

### Preparation comparative example 1:

This preparation comparative example was basically the same as preparation example 1, with the difference lying in that the inorganic particles were not surface-modified or enveloped with the thermosensitive surface layer.

### Preparation comparative example 2:

12 µm PP/7 µm PE composite microporous membranes were used, no coating was provided between the PP microporous membrane and the PE microporous membrane.

### Preparation comparative example 3:

A PE microporous membrane with a thickness of 7 µm was used, the coating slurry in example 1 with a thickness of 1 µm was applied on one side of the PE microporous membrane, so as to create a coating on one side of the PE microporous membrane.

### Preparation comparative example 4:

A 12 µm PP microporous membrane, a 7 µm PE microporous membrane, and an electrostatic spinning microporous membrane were sequentially combined to form the separator, where the electrostatic spinning microporous membrane was made of aramid fiber and had a thickness of 5 µm.

### 2. Performance test for separator

### (1) Pore-closing temperature test:

Test characterization was performed by using the electrochemical impedance method, and the test method was as follows: a button cell was assembled in a glove box, the button cell has a battery structure of stainless steel/separator-electrolyte/stainless steel, where the diameter of the separator was 19 mm, and the diameter of the stainless steel sheet was 16 mm. After assembling, the battery needed to be left standing at room temperature of 25°C for a period of time before subsequent test.

A temperature detector and a resistance detector were connected to the upper and lower sides of the battery respectively. The initial resistance of the battery at 25°C was tested, then the battery was put into an oven for testing, with an initial temperature of 60°C, and the temperature of the oven rose at a velocity of 1 degree Celsius/minute (°C/min) to 150°C, and kept at that temperature for a period of time. As the temperature rose, the resistance gradually increased, increasing to a maximum resistance value and remained stable for a period of time. The temperature corresponding to this period of time was the pore-closing temperature of the separator.

### (2) Puncture strength test:

The separator was fixed under a test fixture, a Gotech tensile machine and a needle penetration fixture were used, a 1.0 mm diameter needle was used on a puncture tester, needle penetration was performed at a speed of 100 millimeters/minute (mm/min), and the puncture strength (in gf) after the data became stable was tested.

### (3) Melting point test:

In this application, the melting point of the thermosensitive material was analyzed and determined by using differential scanning calorimetry. For a specific test method, refer to the standard GB/T 19466.3-2004.

### (4) Particle size test:

In this application, the median particle size by volume distribution Dᵥ50 of the thermosensitive functional material was determined by using a particle size analyzer-laser diffraction method. For a specific test method, refer to the standard GB/T 19077-2016.

For details of different product parameters of the separators prepared in preparation examples 1 to 12 and preparation comparative examples 1 to 4, refer to Table 1.

**Table 1**

| No. | Base film | Thickness of coating (µm) | Thermosensitive material | Core layer | Silane coupling agent | Thickness of thermosensitive surface layer (nm) | Pore-closing temperature of separator (°C) | Puncture strength of separator (gf) |
|---|---|---|---|---|---|---|---|---|
| Preparation example 1 | 7 µm PE/12 µm PP | 1 | Polyethylene | Aluminum oxide | 3-aminopropyltriethoxysilane | 50 | 125 | 585 |
| Preparation example 2 | 7 µm PE/12 µm PP | 1 | Polyethylene | Boehmite | 3-aminopropyltriethoxysilane | 50 | 128 | 572 |
| Preparation example 3 | 7 µm PE/12 µm PP | 1 | Polyethylene | Aluminum oxide | γ-glycidoxypropyltrimethoxysilane | 50 | 125 | 586 |
| Preparation example 4 | 7 µm PE/12 µm PP | 1 | Polyethylene | Aluminum oxide | 3-aminopropyltriethoxysilane | 10 | 130 | 584 |
| Preparation example 5 | 7 µm PE/12 µm PP | 1 | Polybutylene | Aluminum oxide | 3-aminopropyltriethoxysilane | 50 | 126 | 589 |
| Preparation example 6 | 7 µm PE/12 PP | 1 | Polyethylene | Aluminum oxide | 3-aminopropyltriethoxysilane | 100 | 123 | 580 |
| Preparation example 7 | 7 µm PE/12 µm PP | 1 | Polyethylene | Aluminum oxide | 3-aminopropyltriethoxysilane | 50 | 124 | 578 |
| Preparation example 8 | 7 µm PE/7 µm PE | 1 | Polyethylene | Aluminum oxide | 3-aminopropyltriethoxysilane | 50 | 125 | 590 |
| Preparation example 9 | 7 µm PE/12 µm PP | 2 | Polyethylene | Aluminum oxide | 3-aminopropyltriethoxysilane | 50 | 123 | 612 |
| Preparation example 10 | 7 µm PE | 5 | Polyethylene | Aramid fiber | / | 100 | 127 | 342 |
| Preparation example 11 | 12 µm PP | 5 | Polyethylene | Aramid fiber | / | 100 | 126 | 356 |
| Preparation example 12 | 7 µm PE/12 µm PP | 5 | Polyethylene | Aramid fiber | / | 100 | 128 | 593 |
| Preparation comparative example 1 | 7 µm PE/12 µm PP | 1 | / | Aluminum oxide | / | / | 148 | 588 |
| Preparation comparative example 2 | 7 µm PE/12 µm PP | / | / | / | / | / | 140 | 422 |
| Preparation comparative example 3 | 7 µm PE | 1 | Polyethylene | Aluminum oxide | 3-aminopropyltriethoxysilane | 50 | 125 | 368 |
| Preparation comparative example 4 | 12 µm PP/7 µm PE/electrostatic spinning separator | / | / | Aramid fiber | / | / | 142 | 596 |

It can be seen from the data of the above preparation examples and preparation comparative examples that the thermosensitive functional materials using inorganic particles as the high-temperature-resistant core layer and the organic polymer fiber as the high-temperature-resistant core layer can sensitively react to close the pores at the initial stage of abnormal high temperature in the battery cell, blocking heat accumulation in a timely manner, and effectively reducing the probability of safety accidents.

The coating of the separator in this application can strengthen the thermal shrinkage resistance of the separator under high-temperature conditions and significantly enhance the puncture strength of the separator, thus enhancing the use strength and high-temperature resistance of the separator inside the battery.

### II. Application examples

### Application example 1

### (1) Preparation of positive electrode plate

A positive electrode active material lithium iron phosphate, conductive carbon black SP, and a binder PVDF were dispersed in a solvent NMP at a weight ratio of 98:1:1 and well mixed to obtain a positive electrode slurry. The positive electrode slurry was uniformly applied on a positive electrode current collector aluminum foil, followed by drying and cold pressing, to obtain a positive electrode plate. A coating amount per unit area was 0.27 g/1540.25 mm².

### (2) Preparation of negative electrode plate

A negative electrode active material graphite, a thickener sodium carboxymethyl cellulose, a binder styrene-butadiene rubber, and a conductive agent acetylene black were mixed at a mass ratio of 97:1:1:1, added with deionized water, and stirred by a vacuum stirrer to obtain a negative electrode slurry. The negative electrode slurry was uniformly applied on copper foil; the copper foil was dried at room temperature, then transferred to an oven at 120°C for 1 h for drying, and then cold-pressed and split to obtain a negative electrode plate. A coating amount per unit area was 0.17 g/1540.25 mm².

### (3) Separator

### The separator in preparation example 1 was used.

### (4) Preparation of electrolyte

An organic solvent was a mixture of ethylene carbonate (EC), ethyl methyl carbonate (EMC), and diethyl carbonate (DEC), where a volume ratio of EC, EMC, and DEC was 20:20:60. In an argon atmosphere glove box with a water content less than 10 ppm, a fully dried lithium salt LiPF₆ was dissolved in the organic solvent and mixed to uniformity to obtain an electrolyte. A concentration of the lithium salt was 1 mol/L.

### (5) Preparation of battery

The positive electrode plate, the separator, and the negative electrode plate were stacked in sequence, so that the separator was sandwiched between positive and negative electrode plates for isolation. Then, the positive electrode plate, the separator, and the negative electrode plate were wound to form a prismatic bare cell. The bare cell was packaged with an aluminum-plastic film, and then heated at 80°C for water content removal, with a corresponding non-aqueous electrolyte of 10 g injected, followed by processes such as sealing, standing, hot/cold pressing, formation, clamping, and grading, to obtain a finished battery with a capacity of 4000 mAh.

The secondary batteries of application examples 2 to 12 and application comparative examples 1 to 4 were prepared in a similar method to the secondary battery of application example 1, but with the corresponding separators of the preparation examples and preparation comparative examples used.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A separator, comprising a first base film and a coating provided on at least one surface of the first base film, wherein the coating comprises a thermosensitive functional material, the thermosensitive functional material comprises a high-temperature-resistant core layer and a thermosensitive surface layer at least partially enveloping the high-temperature-resistant core layer, and the high-temperature-resistant core layer comprises one or more of organic polymer fiber and inorganic particle that is surface-modified by a silane coupling agent.

2. The separator according to claim 1, **characterized in that** a melting point of the thermosensitive surface layer is 80°C-140°C; and
optionally, the melting point of the thermosensitive surface layer is 85°C-135°C.

3. The separator according to claim 1 or 2, **characterized in that** the thermosensitive surface layer comprises one or more of a polyethylene surface layer, a polybutylene surface layer, an ethylene-propylene copolymer surface layer, a polyethylene wax surface layer, a polyethylene oxide wax surface layer, and a polypropylene wax surface layer.

4. The separator according to any one of claims 1 to 3, **characterized in that** the silane coupling agent comprises one or more of 3-aminopropyltriethoxysilane, γ-glycidoxypropyltrimethoxysilane, γ-(methacryloxy)propyltrimethoxysilane, N-(β-aminoethyl)-γ-aminopropyltrimethoxysilane, N-(β-aminoethyl-y-aminopropyl)methyldimethoxysilane, and vinyltrimethoxysilane.

5. The separator according to any one of claims 1 to 4, **characterized in that** a median particle size by volume distribution Dᵥ50 of the thermosensitive functional material is 0.2 µm-3 µm; and
optionally, the median particle size by volume distribution Dᵥ50 of the thermosensitive functional material is 0.6 µm-1.0 µm.

6. The separator according to any one of claims 1 to 5, **characterized in that** the organic polymer fiber comprises one or more of aramid fiber, polyacrylonitrile fiber, polyimide fiber, polycarbonate fiber, polyphenylene sulfide fiber, polyether-ether-ketone fiber, polysulfone fiber, and polyarylate fiber.

7. The separator according to any one of claims 1 to 6, **characterized in that** diameter of the organic polymer fiber is 50 nm-2000 nm.

8. The separator according to any one of claims 1 to 7, **characterized in that** thickness of the thermosensitive surface layer is 10 nm-1000 nm; and
optionally, the thickness of the thermosensitive surface layer is 60 nm-150 nm.

9. The separator according to any one of claims 1 to 8, **characterized in that** the inorganic particle comprises one or more of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, and magnesium fluoride.

10. The separator according to any one of claims 1 to 9, **characterized in that** the coating further comprises a binder; and
optionally, the binder comprises one or more of vinylidene fluoride-hexafluoropropylene copolymer, vinylidene fluoride-trichloroethylene copolymer, polystyrene, polyacrylate ester, polyacrylic acid, polyacrylate salt, polyacrylonitrile, polyvinylpyrrolidone, polyvinyl acetate, ethylene-vinyl acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, carboxymethyl cellulose, sodium carboxymethyl cellulose, lithium carboxymethyl cellulose, acrylonitrile-styrene-butadiene copolymer, polydiformylphenylenediamine, polyvinyl alcohol, styrene-butadiene copolymer, and polyvinylidene fluoride.

11. The separator according to claim 10, **characterized in that** a mass ratio of the thermosensitive functional material to binder in the coating is 2:1-8:1.

12. The separator according to any one of claims 1 to 11, **characterized in that** thickness of the coating is 0.5 µm-20 µm.

13. The separator according to any one of claims 1 to 12, **characterized in that** the separator further comprises a second base film, and the coating is disposed between the first base film and the second base film.

14. The separator according to claim 13, **characterized in that** the first base film and the second base film are each independently selected from one or more of polyethylene, polypropylene, polyethylene terephthalate, polydiformylphenylenediamine, polybutylene terephthalate, polyester, polyacetal, polyamide, polycarbonate, polyimide, polyether-ether-ketone, polyaryletherketone, polyetherimide, polyamideimide, polybenzimidazole, polyethersulfone, polyphenylene oxide, cycloolefin copolymer, polyphenylene sulfide, and polyvinyl naphthaline.

15. A preparation method of separator, **characterized by** comprising the following steps:
providing a first base film and a coating slurry, wherein the coating slurry comprises a thermosensitive functional material; and
applying the coating slurry on at least one surface of the first base film, followed by drying to obtain a separator;
wherein the thermosensitive functional material comprises a high-temperature-resistant core layer and a thermosensitive surface layer at least partially enveloping the high-temperature-resistant core layer, and the high-temperature-resistant core layer comprises one or more of organic polymer fiber and inorganic particle that is surface-modified by a silane coupling agent.

16. The preparation method of separator according to claim 15, **characterized in that** a preparation method of the thermosensitive functional material comprises the following steps:
dispersively mixing inorganic particles with a silane coupling agent to obtain inorganic particles surface-modified by the silane coupling agent; and
dispersively mixing the inorganic particles surface-modified by the silane coupling agent with a solution containing a thermosensitive surface layer material, and removing a solvent to obtain the thermosensitive functional material with inorganic particles as a core and a thermosensitive surface layer as a shell.

17. The preparation method of separator according to claim 15, **characterized in that** a preparation method of the thermosensitive functional material comprises the following step:
performing electrostatic spinning on a thermosensitive surface layer material and an organic polymer stock solution together to obtain the thermosensitive functional material with organic polymer fiber as a core and a thermosensitive surface layer as a shell.

18. The preparation method of separator according to any one of claims 15 to 17, **characterized in that** after the applying the coating slurry on at least one surface of the first base film and before drying, the preparation method further comprises the following steps:
providing a second base film; and
attaching the second base film to a surface of the coating slurry facing away from the first base film.

19. A secondary battery, **characterized by** comprising the separator according to any one of claims 1 to 14 or a separator prepared by using the preparation method of separator according to any one of claims 15 to 18.

20. An electric apparatus, **characterized by** comprising the secondary battery according to claim 19.
